# EUROPÄISCHE PATENTSCHRIFT

(11) **EP 3 272 532 B1**
(45) Veröffentlichungstag und Bekanntmachung des Hinweises auf die Patenterteilung: **05.08.2020**
(21) Anmeldenummer: 17182464.2
(22) Anmeldetag: 20.07.2017
(51) Int. Cl.: B32B 38/06, A61G 21/00, B60R 13/00, B29C 59/02, B44C 1/24, B44C 5/04

(54) **VERFAHREN ZUR HERSTELLUNG EINER GEPRÄGTEN FAHRZEUG-DEKORPLATTE MIT SEPARATER OBERFLÄCHENSCHICHT**
METHOD FOR MANUFACTURING EMBOSSED VEHICLE DECORATION PLATE WITH SEPARATE SURFACE LAYER
PROCÉDÉ DE FABRICATION DE PLAQUE DÉCORATIVE DE VÉHICULE GAUFRÉE POURVUE D'UNE COUCHE SUPERFICIELLE SÉPARÉE

(30) Priorität: 21.07.2016 DE 202016103984 U
(43) Veröffentlichungstag der Anmeldung: 24.01.2018
(73) Patentinhaber: Schmidt, Udo, 48734 Reken (DE)
(72) Erfinder: Schmidt, Udo, 48734 Reken (DE)
(74) Vertreter: Habbel, Ludwig

(56) Entgegenhaltungen:
- DE-U1-202014 104 512
- US-A- 4 961 896

## Beschreibung

Die Erfindung betrifft ein Verfahren zur Herstellung einer Fahrzeug-Dekorplatte nach dem Oberbegriff des Anspruchs 1.

Aus der DE 20 2014 104 512 U1 ist es bekannt, zur Herstellung einer Dekorplatte für ein Bestattungsfahrzeug einen formstabilen Träger durch einen Pressvorgang mit einer dreidimensional geformten, einen Faltenwurf darstellenden Sichtfläche zu versehen. Als Oberflächenmaterial werden anschließend Fasern in Art einer Beflockung auf die Sichtfläche aufgebracht, um der Sichtfläche ein textilartiges Aussehen zu verleihen.

Aus der US 4 961 896 A, die als nächstkommender Stand der Technik angesehen wird, ist es bekannt, Dekorplatten dadurch herzustellen, dass zunächst ein Träger mit einer Flockfolie versehen wird und dann der Träger und die darauf befindliche Flockfolie gemeinsam erwärmt und somit erweicht werden. In diesem Zustand werden dann die Flockfolie und der Träger mittels eines dreidimensional profilierten Prägewerkzeugs gemeinsam verformt, um so die dreidimensional geformte Sichtfläche der Dekorplatte zu schaffen.

Zu Gunsten einer möglichst realitätsnahen, stoffähnlichen Ausgestaltung der dreidimensional profilierten Sichtfläche, die bei einem Bestattungsfahrzeug typischerweise den Faltenwurf einer Gardine simuliert, kann die dreidimensionale Sichtfläche der Dekorplatte beflockt sein. Die kurzen Fasern verleihen der Sichtfläche der Fahrzeugdekorplatte recht gut die Anmutung eines Velourstoffs. Statt der Beflockung kann jedoch eine möglichst realistische textile Oberflächenschicht auf der Sichtfläche durch eine textile Bespannung geschaffen werden. Insbesondere, wenn diese textile Bespannung dehnbare Fasern enthält, kann sie an die Profilierung der dreidimensional ausgestalteten Sichtfläche angepasst werden, ohne unerwünschte, optisch störende Falten zu werfen.

Der Erfindung liegt die Aufgabe zugrunde, das gattungsgemäße Verfahren zur Herstellung einer Fahrzeug-Dekorplatte dahingehend zu verbessern, dass es möglichst wirtschaftlich durchführbar ist.

Diese Aufgabe wird durch ein Verfahren nach Anspruch 1 gelöst. Vorteilhafte Ausgestaltungen sind in den Unteransprüchen beschrieben.

Die Erfindung schlägt mit anderen Worten vor, eine qualitativ hochwertige optische Erscheinung dadurch sicherzustellen, dass eine perfekte Anlage des Oberflächenmaterials an der dreidimensionalen Sichtfläche der Dekorplatte dadurch gewährleistet wird, dass das Oberflächenmaterial mittels einer dreidimensional profilierten Prägefläche eines Prägewerkzeugs an die Sichtfläche der Fahrzeug-Dekorplatte angepresst wird. Dabei ist vorgesehen, dass die Sichtfläche der Fahrzeug-Dekorplatte ihre Profilierung nicht etwa durch Fräsvorgänge o. dgl. erhält, sondern ebenfalls durch den Prägevorgang als Material für den Rohling der Fahrzeug-Dekorplatte eignen sich daher insbesondere vorteilhaft Materialien, die ein gewisses Porenvolumen aufweisen, so dass sie mittels des Prägewerkzeugs bereichsweise verdichtet werden können und auf diese Weise eine dreidimensionale Oberflächengestaltung der Fahrzeug-Dekorplatte möglich ist, ohne dazu Material von dem Rohling der Fahrzeug-Dekorplatte abnehmen zu müssen. Auf diese Weise wird eine sehr saubere, von Spänen und ähnlichen Verschmutzungen freie Herstellung der Fahrzeug-Dekorplatte ermöglicht, so dass dementsprechend auch kein Aufwand betrieben zu werden braucht, um solche Späne zu entfernen, die ansonsten ggf. bei der Herstellung der Fahrzeug-Dekorplatte stören könnten oder auch das optische Ergebnis der Fahrzeug-Dekorplatte auf deren Sichtfläche beeinträchtigen könnten.

Die vorschlagsgemäße Fahrzeug-Dekorplatte ist also als Prägeplatte ausgestaltet. Beispielsweise kann eine Holzwerkstoffplatte mit einem entsprechenden Porenvolumen bei entsprechend hohem Druck geprägt werden. Besonders vorteilhaft hat sich allerdings herausgestellt, als Rohling der Dekorplatte eine Hartschaum-Kunststoffplatte zu verwenden und die dreidimensionale Profilierung auf der Sichtfläche mittels eines beheizten Prägewerkzeugs zu schaffen.

Vorschlagsgemäß wird die Fahrzeug-Dekorplatte in der Weise geschaffen, dass das auf die Sichtfläche aufzubringende Oberflächenmaterial zunächst als zweidimensionales Flächenmaterial vorliegt, beispielsweise als Bahn, als Folie, als Tuch o. dgl., und dass dieses Oberflächenmaterial zwischen dem Rohling der Fahrzeug-Dekorplatte und dem Prägewerkzeug angeordnet wird. Wenn das Prägewerkzeug anschließend in Kontakt mit dem Rohling der Fahrzeug-Dekorplatte gebracht wird, so wird dabei automatisch auch das zweidimensionale Oberflächenmaterial gegen den Rohling der Fahrzeug-Dekorplatte gebracht und beim weiteren Kontakt zwischen Prägewerkzeug und Rohling wird die dreidimensional profilierte Sichtfläche der Fahrzeug-Dekorplatte geschaffen und dabei gleichzeitig auch das Oberflächenmaterial aus seiner Zweidimensionalität verformt und fest mit der dreidimensional profilierten Oberfläche des Rohlings der Fahrzeug-Dekorplatte verbunden. Anschließend muss lediglich die so geschaffene Fahrzeug-Dekorplatte besäumt werden, indem beispielsweise überstehende Anteile des Rohlings und/oder des zweidimensionalen Oberflächenmaterials entfernt werden.

Dadurch, dass das zweidimensionale Oberflächenmaterial mittels des Prägewerkzeugs in Kontakt mit dem Rohling des Trägers gebracht wird, können zusätzliche Arbeitsschritte vermieden werden, die ansonsten darin bestehen würden, zunächst das Oberflächenmaterial auf der Seite des Rohlings anzubringen, welche später die Sichtfläche der Dekorplatte bilden soll. Abgesehen von diesem zusätzlichen Arbeitsschritt, der vorschlagsgemäß eingespart werden kann, kann auch ein zeitlicher Vorteil des vorschlagsgemäßen Verfahrens darin liegen, dass Trockungs- oder Abbindezeiten eingespart werden können, die ansonsten gegebenenfalls erforderlich sein können, wenn das Oberflächenmaterial zunächst auf dem Rohling angebracht worden ist und bevor die weitere Bearbeitung mittels des Prägewerkzeugs erfolgen kann. Ebenfalls besteht kein Platzbedarf, um während derartiger Trockungs- oder Abbindezeiten die mit dem Oberflächenmaterial versehenen Rohlinge zwischenzulagern, bis sie weiter verarbeitet werden können.

Ein zuverlässiger Halt des Oberflächenmaterials am Rohling der Fahrzeug-Dekorplatte kann vorteilhaft dadurch gewährleistet werden, dass das Oberflächenmaterial mittels Klebstoff an der Sichtfläche des Rohlings befestigt ist. Beispielsweise kann zunächst der Rohling auf der zu prägenden und die Sichtfläche bildenden Oberfläche mit einem Klebstoff versehen werden, beispielsweise mit einem Sprühkleber. Es können dann vier unterschiedliche Oberflächenmaterialien fest mit dem Rohling der Fahrzeug-Dekorplatte im Verlauf des Prägevorgangs verbunden werden, auch wenn diese Materialien beispielsweise unter den beim Prägen verwendeten Drücken und Temperaturen nicht von sich aus eine klebende oder dauerhafte Verbindung mit dem Rohling der Fahrzeug-Dekorplatte eingehen. So können beispielsweise Kunststofffolien, textile Bahnen o. dgl. als Oberflächenmaterial die äußere Oberfläche der Sichtfläche der Fahrzeug-Dekorplatte bilden.

Besonders vorteilhaft kann ein selbstklebend ausgestaltetes Oberflächenmaterial Verwendung finden, weil hierdurch die Handhabung während des Herstellungsprozesses vereinfacht wird und beispielsweise kein Klebstoff über die eigentlich erwünschte Klebefläche hinaus aufgetragen wird, beispielsweise versprüht wird.

Vorteilhaft kann das Oberflächenmaterial durch eine Flockfolie gebildet sein. Eine beflockte Oberfläche der Fahrzeug-Dekorplatte ist aus den eingangs geschilderten Gründen vorteilhaft. Die Verarbeitung der Flocken bei einer Beflockung der dreidimensionalen Sichtfläche der Dekorplatte erfordert präzise eingehaltene klimatische Bedingungen, so dass sie im Jahresverlauf beispielsweise qualitativen Schwankungen unterworfen sein kann. Durch die Verwendung einer industriellen vorgefertigten Flockfolie können derartige Qualitätsschwankungen zuverlässig ausgeschlossen werden und es wird stets der gewünschte, optimale optische Eindruck der Sichtfläche der Fahrzeug-Dekorplatte sichergestellt. Flockfolien sind handelsüblich erhältlich. Sie weisen eine zweidimensionale Trägerschicht auf, beispielsweise in Form einer Kunststofffolie. Auf der Kunststofffolie sind die einzelnen Fasern jeweils im Winkel angeordnet, beispielsweise annähernd entsprechend der Flächennormalen der Trägerschicht, oder auch in einem schrägen Winkel. Jedenfalls kann die Flockfolie von einer Rolle abgezogen und zwischen Prägewerkzeug und dem Rohling der Fahrzeug-Dekorplatte gebracht werden, anschließend erfolgt der eigentliche Prägevorgang, bei dem nun ein Arbeitsschritt eingespart werden kann, da anschließend an den Prägevorgang nicht das Aufbringen von Oberflächenmaterial auf die geprägte, dreidimensionale Sichtfläche des Rohlings erforderlich ist. Vielmehr wird beim Prägevorgang unmittelbar die Sichtfläche der Fahrzeug-Dekorplatte fertig gestellt, da mit dem Prägevorgang auch das Oberflächenmaterial auf den Rohling der Fahrzeug-Dekorplatte aufgebracht wird.

## Patentansprüche

1. Verfahren zur Herstellung einer Fahrzeug-Dekorplatte eines Bestattungsfahrzeugs,
wobei die Fahrzeug-Dekorplatte ein formstabiles, als Rohling bezeichnetes Flächenelement aufweist, welches zwei gegenüberliegende Oberflächen und eine umlaufende Kante aufweist,
eine der beiden Oberflächen als Sichtfläche bezeichnet ist und mit einer dreidimensional geformten, einen Faltenwurf darstellenden Sichtfläche versehen wird,
und hierzu die Sichtfläche mit einer an den dargestellten Faltenwurf angepassten Profilierung versehen wird,
und wobei die Sichtfläche mit einem Oberflächenmaterial versehen wird,
wobei die Fahrzeug-Dekorplatte wie folgt hergestellt wird:
bevor die Fahrzeug-Dekorplatte in Kontakt mit einem Prägewerkzeug gerät, wird das Oberflächenmaterial als zweidimensionales Flächenmaterial zwischen dem Prägewerkzeug und dem Rohling angeordnet,
der Rohling der Fahrzeug-Dekorplatte wird mittels des Prägewerkzeugs geprägt,
wobei das Prägewerkzeug dreidimensional profiliert ist und
die Sichtfläche die Profilierung des Prägewerkzeugs erhält,
und wobei auch das Oberflächenmaterial der Profilierung des Prägewerkzeugs und der Sichtfläche folgt,
**dadurch gekennzeichnet,**
**dass** das Oberflächenmaterial während des Prägevorgangs mittels des Prägewerkzeugs dem Rohling der Fahrzeug-Dekorplatte angelegt wird,
derart, dass das Oberflächenmaterial der Profilierung des Prägewerkzeugs und der Sichtfläche folgend fest mit der Sichtfläche des Rohlings verbunden wird.

2. Verfahren zur Herstellung einer Fahrzeug-Dekorplatte nach Anspruch 1,
**dadurch gekennzeichnet,**
**dass** das Oberflächenmaterial mittels Klebstoff an der Sichtfläche befestigt wird.

3. Verfahren zur Herstellung einer Fahrzeug-Dekorplatte nach Anspruch 2,
**dadurch gekennzeichnet,**
**dass** das Oberflächenmaterial ein selbstklebend ausgestaltetes zweidimensionales Flächenmaterial ist.

4. Verfahren zur Herstellung einer Fahrzeug-Dekorplatte nach einem der vorhergehenden Ansprüche,
**dadurch gekennzeichnet,**
**dass** als Oberflächenmaterial eine Flockfolie verwendet wird,
welche eine zweidimensionale Trägerschicht aufweist sowie eine Vielzahl von kurzen Fasern, die im Winkel zu der Fläche der Trägerschicht verlaufen.

## Claims

1. Method of manufacturing a motor vehicle decorative panel for a hearse, where the motor vehicle decorative panel incorporates a stably formed flat element designated as a blank that incorporates two opposing surfaces and an edge running all the way round,
where one of the two surfaces is designated as a visible surface and is provided with a three-dimensionally shaped visible surface representing a drapery arrangement and the visible surface is also provided with a profile adapted to suit the drapery arrangement represented and where the visible surface is provided with a surface material,
where the motor vehicle decorative panel is manufactured as follows:
before the motor vehicle decorative panel comes into contact with a stamping tool, the surface material is disposed as a two-dimensional flat material between the stamping tool and
the blank and the blank for the motor vehicle decorative panel is stamped by means of the stamping tool,
where the stamping tool has a three-dimensional profile and the visible surface receives the profiling of the stamping tool,
and where also the surface material follows the profiling of the stamping tool and the visible surface,
**characterised in that** during the stamping process the surface material is placed by the stamping tool against the blank for the motor vehicle decorative panel in such a way that,
following the profiling of the stamping tool and the visible surface, the surface material is firmly attached to the visible surface of the blank.

2. Method of manufacturing a motor vehicle decorative panel in accordance with claim 1, **characterised in that** the surface material is fixed to the visible surface by means of an adhesive.

3. Method of manufacturing a motor vehicle decorative panel in accordance with claim 2, **characterised in that** the surface material is a two-dimensional flat material designed to be self-adhesive.

4. Method of manufacturing a motor vehicle decorative panel in accordance with any one of the foregoing claims, **characterised in that** a flock film that incorporates a two-dimensional carrier layer and a plurality of short threads that extend at an angle to the surface of the carrier layer is used as surface material.

## Revendications

1. Procédé de fabrication d'un panneau enjoliveur pour véhicule funéraire,
sachant que le panneau enjoliveur pour véhicule présente un élément plat de forme stable, appelé pièce brute, qui présente deux surfaces opposées et un bord périmétrique,
sachant que l'une des deux surfaces est appelée surface apparente et est munie d'une surface visible de forme tridimensionnelle représentant un drapé, et qu'à cette fin la surface visible est dotée d'un profilage adapté au drapé représenté,
et sachant que la surface visible est munie d'un matériau superficiel,
sachant que le panneau enjoliveur pour véhicule est fabriqué de la manière suivante :
avant que le panneau enjoliveur pour véhicule n'entre en contact avec un outil de gaufrage, le matériau superficiel est disposé sous forme de matériau plat bidimensionnel entre l'outil de gaufrage et la pièce brute, et la pièce brute du panneau enjoliveur pour véhicule est gaufrée au moyen de l'outil de gaufrage,
sachant que l'outil de gaufrage est profilé tridimensionnel et que la surface visible reçoit le profilage de l'outil de gaufrage,
et sachant aussi que le matériau superficiel suit le profilage de l'outil de gaufrage et de la surface visible,
**caractérisé en ce que** pendant l'opération de gaufrage le matériau superficiel est appliqué au moyen de l'outil de gaufrage contre la pièce brute du panneau enjoliveur pour véhicule,
de sorte que le matériau superficiel, en suivant le profilage de l'outil de gaufrage et celui de la surface visible, est relié ferme avec la surface visible de la pièce brute.

2. Procédé de fabrication d'un panneau enjoliveur pour véhicule selon la revendication 1, **caractérisé en ce que** le matériau superficiel est fixé contre la surface visible au moyen de colle.

3. Procédé de fabrication d'un panneau enjoliveur pour véhicule selon la revendication 2, **caractérisé en ce que** le matériau superficiel est un matériau plat bidimensionnel apprêté autocollant.

4. Procédé de fabrication d'un panneau décoratif selon l'une des revendications précédentes, **caractérisé en ce qu'**est utilisée comme matériau superficiel une feuille de flock qui comporte une couche porteuse bidimensionnelle ainsi qu'un grand nombre de fibres courtes dont le tracé forme un angle avec la surface de la couche porteuse.
